# EUROPEAN PATENT APPLICATION

(11) **EP 2 733 602 A2**
(43) Date of publication of application: **21.05.2014**
(21) Application number: 12275178.7
(22) Date of filing: 20.11.2012
(51) Int. Cl.: G06F 3/147, G09G 3/20

(54) **Electronic shelf label and method for displaying the same**

(30) Priority: 14.11.2012 KR 20120129012
(71) Applicant: Samsung Electro-Mechanics Co., Ltd., Gyeonggi-do (KR)
(72) Inventor: You,, Min Su, 443-743 Gyeonggi-do (KR); Moon,, Ung Han, 443-743 Gyeonggi-do (KR); Seo,, Jeong Su, 443-743 Gyeonggi-do (KR)
(74) Representative: Potter Clarkson LLP

(57) **Abstract**

Disclosed herein are an electronic shelf label and a method of displaying the same. The electronic shelf label includes: a segment display; a dot-matrix display; a display driver integrated chip (IC) generating a control signal for turning on or off the segments and the dots of the segment display and the dot-matrix display; a radio frequency (RF) module performing communication with a server or a relay; and a controller generating a control command controlling the display driver IC according to a signal received through the RF module.

## Description

### CROSS REFERENCE(S) TO RELATED APPLICATIONS

This application claims the benefit of Korean Patent Application Serial No. 10-2012-0129012, entitled "Electronic Shelf Label and Method of Displaying the Same" filed on November 14, 2012, which is hereby incorporated by reference in its entirety into this application.

### BACKGROUND OF THE INVENTION

### 1. Technical Field

The present invention relates to an electronic shelf label and a method of displaying the same.

### 2. Description of the Related Art

Generally, at a place at which a large number of products are displayed and sold in a predetermined space, such as a retail store, a paper label displaying information and a price of each product has been mainly used. However, since product information should be separately written manually on the paper label whenever the production information is updated, which is troublesome and is difficult in view of management, the paper label has been recently replaced by an electronic shelf label (ESL). Technologies associated with the ESL have been introduced in Patent Document 1, Patent Document 2, and the like.

When update information of the product is wirelessly transmitted from a relay according to a request of a server, the electronic shelf label receives and displays the update information of the product. That is, since electronic shelf labels for all products may be controlled through the server, the products may be efficiently managed. Since the electronic shelf label includes many circuits such as a communicating unit, a processor, a display panel, and the like, it should be continuously supplied with power. To this end, an inner portion of the electronic shelf label is mounted with a battery.

Meanwhile, as a scheme in which the electronic shelf label displays information, there are a segment scheme and a dot-matrix scheme.

First, the segment scheme, which is a scheme of displaying numbers, characters, and special symbols by turning on or off predetermined segments in a panel in which a plurality of segments are disposed, is also called a passive scheme.

Next, the dot-matrix scheme, which is a scheme of dividing a dot-matrix including a plurality of dots configuring a lattice pattern into (X,Y) coordinates and turning on or off dots corresponding to specific coordinates, is also called an active scheme.

The dot-matrix scheme has an advantage in that it may display various graphic screens as compared with the segment scheme. However, a manufacturing cost of a dot-matrix panel is significantly higher than that of a segment panel and an amount to be processed is significantly increased, such that a configuration cost of a system is rapidly increased.

Therefore, according to the related art, generally, price information, sale information, and the like, of a product that are frequently changed has been displayed in the segment scheme, and an image, a manufacturer, a summary description, a barcode, and the like, of the product, have been manufactured as separate printing matters and then inserted next to the electronic shelf label or detached from or attached to the electronic shelf label.

In the related scheme as described above, there was inconvenience that the printed matter should be replaced, and there was a problem that a significant time is required to change information.

### [Related Art Document]

### [Patent Document]

(Patent Document 1) Korean Patent Laid-Open Publication No. 2011-0051076
(Patent Document 2) Korean Patent Laid-Open Publication No. 2012-0090105

### SUMMARY OF THE INVENTION

An object of the present invention is to provide an electronic shelf label including both of a segment display and a dot-matrix display.

Another object of the present invention is to provide a method of displaying an electronic shelf label for displaying information on an electronic shelf label including both of a segment display and a dot-matrix display.

According to an exemplary embodiment of the present invention, there is provided an electronic shelf label performing communication with a server or a relay to display information, the electronic shelf label including: a segment display including a plurality of segments and displaying the information according to turn on or off the respective segments; a dot-matrix display including a plurality of dots and displaying the information according to turn on or off of the dots determined by X and Y coordinates; a display driver integrated chip (IC) generating a control signal for turning on or off the segments and the dots of the segment display and the dot-matrix display; a radio frequency (RF) module performing communication with the server or the relay; and a controller generating a control command controlling the display driver IC according to a signal received through the RF module.

The display driver IC may include: an interface unit connected to the controller to receive the control command; a logic processing unit connected to the interface unit and processing the control command to generate the control signal; and an output unit connected to the logic processing unit to output the control signal.

The display driver IC may include: an interface unit connected to the controller to receive a control command including first data; a memory unit storing second data included in a control command immediately before the control command received by the interface unit; a judging unit connected to the interface unit and the memory unit and comparing the first data with the second data to extract only data different from the second data, in the first data; a logic processing unit connected to the judging unit and processing the control command to generate the control signal; and an output unit connected to the logic processing unit to output the control signal.

The logic processing unit may include: a lookup table; and a selecting unit.

The output unit may include: a segment control signal output unit connected between the selecting unit and the segment display and outputting the control signal for turning on or off the segments; and a dot-matrix control signal output unit connected between the selecting unit and the dot-matrix display and outputting the control signal for turning on or off the dots.

The segment control signal output may include a passive buffer, and the dot-matrix control signal output unit may include a source buffer and a gate buffer.

According to another exemplary embodiment of the present invention, there is provided an electronic shelf label performing communication with a server or a relay to display information, the electronic shelf label including: a substrate including a circuit pattern; a segment display laminated on one surface of the substrate, including a plurality of segments, and displaying the information according to turn on or off the respective segments; a dot-matrix display including a plurality of dots and displaying the information according to turn on or off of the dots determined by X and Y coordinates; a display driver IC generating control signals for turning on or off the segments and the dots of the segment display and the dot-matrix display; an RF module provided on the other surface of the substrate and performing communication with the server or the relay; and a controller provided on the other surface of the substrate and generating a control command controlling the display driver IC according to a signal received through the RF module.

One end of a flexible printed circuit board including a circuit wiring may be connected to one end of the dot-matrix display, the display driver IC may be electrically and physically coupled to the flexible printed circuit board, and the other end of the flexible printed circuit board may be physically coupled to the substrate, such that the display driver IC is electrically connected to the dot-matrix display and the circuit pattern by the circuit wiring.

The segment display and the display driver IC may be electrically connected to each other by the circuit pattern and the flexible printed circuit board.

The electronic shelf label may further include a segment control signal transmitting line connected between a circuit pattern electrically connected to the segment display in the circuit pattern and the display driver IC and transferring a segment control signal controlling the turn on or off of the segments.

According to still another exemplary embodiment of the present invention, there is provided an electronic shelf label performing communication with a server or a relay to display information, the electronic shelf label including: a segment display including a plurality of segments and displaying the information according to turn on or off the respective segments; a segment display driver IC generating a control signal for turning on or off the segments of the segment display unit; a dot-matrix display including a plurality of dots and displaying the information according to turn on or off of the dots determined by X and Y coordinates; a dot-matrix driver IC generating a control signal for turning on or off the dots of the dot-matrix display; an RF module performing communication with the server or the relay; and a controller generating a control command controlling the segment display driver IC and the dot-matrix display driver IC according to a signal received through the RF module.

According to still another exemplary embodiment of the present invention, there is provided an electronic shelf label performing communication with a server or a relay to display information, the electronic shelf label including: a substrate including a circuit pattern; a segment display laminated on one surface of the substrate, including a plurality of segments, and displaying the information according to turn on or off the respective segments; a segment display driver IC provided on the other surface of the substrate, connected to the segment display by the circuit pattern, and generating a control signal for turning on or off the segments of the segment display unit; a dot-matrix display including a plurality of dots and displaying the information according to turn on or off of the dots determined by X and Y coordinates; a dot-matrix driver IC generating a control signal for turning on or off the dots of the dot-matrix display; an RF module provided on the other surface of the substrate and performing communication with the server or the relay; and a controller provided on the other surface of the substrate and generating a control command controlling the segment display driver IC and the dot-matrix display driver IC according to a signal received through the RF module.

One end of a flexible printed circuit board including a circuit wiring may be connected to one end of the dot-matrix display, the dot-matrix display driver IC may be electrically and physically coupled to the flexible printed circuit board, and the other end of the flexible printed circuit board may be physically coupled to the substrate, such that the dot-matrix display driver IC is electrically connected to the dot-matrix display and the circuit pattern by the circuit wiring.

According to still another exemplary embodiment of the present invention, there is provided a method of displaying an electronic shelf label, the method including: (a) comparing, by the display driver IC, the first data with the second data; (b) extracting only data different from the second data, in the first data; (c) generates a control signal for displaying the data extracted in step (b); and (d) applying the control signal generated in step (c) to the segment display or the dot-matrix display to change a display content.

### BRIEF DESCRIPTION OF THE DRAWINGS

FIG. 1 is a block diagram showing a configuration of a system including an electronic shelf label according to an exemplary embodiment of the present invention;
FIG. 2 is a plan view schematically showing the electronic shelf label according to the exemplary embodiment of the present invention;
FIG. 3 is a block diagram schematically showing the electronic shelf label according to the exemplary embodiment of the present invention;
FIG. 4 is a block diagram showing main components of the electronic shelf label according to the exemplary embodiment of the present invention in detail;
FIG. 5 is a block diagram showing main components of an electronic shelf label according to another exemplary embodiment of the present invention in detail;
FIG. 6 is a partially separated cross-sectional view schematically showing the electronic shelf label according to the exemplary embodiment of the present invention;
FIG. 7 is a block diagram schematically showing an electronic shelf label according to still another exemplary embodiment of the present invention;
FIG. 8 is a partially separated cross-sectional view schematically showing the electronic shelf label according to still another exemplary embodiment of the present invention; and
FIG. 9 is a flow chart schematically showing a method of displaying an electronic shelf label according to the exemplary embodiment of the present invention.

### DESCRIPTION OF THE PREFERRED EMBODIMENTS

Various advantages and features of the present invention and methods accomplishing thereof will become apparent from the following description of exemplary embodiments with reference to the accompanying drawings. However, the present invention may be modified in many different forms and it should not be limited to exemplary embodiments set forth herein. These exemplary embodiments may be provided so that this disclosure will be thorough and complete, and will fully convey the scope of the invention to those skilled in the art. Like reference numerals throughout the description denote like elements.

Terms used in the present specification are for explaining exemplary embodiments rather than limiting the present invention. Unless explicitly described to the contrary, a singular form includes a plural form in the present specification. The word "comprise" and variations such as "comprises" or "comprising," will be understood to imply the inclusion of stated constituents, steps, operations and/or elements but not the exclusion of any other constituents, steps, operations and/or elements.

For simplification and clearness of illustration, a general configuration scheme will be shown in the accompanying drawings, and a detailed description of the feature and the technology well known in the art will be omitted in order to prevent a discussion of exemplary embodiments of the present invention from being unnecessarily obscure. Additionally, components shown in the accompanying drawings are not necessarily shown to scale. For example, sizes of some components shown in the accompanying drawings may be exaggerated as compared with other components in order to assist in understanding of exemplary embodiments of the present invention. Like reference numerals on different drawings will denote like components, and similar reference numerals on different drawings will denote similar components, but are not necessarily limited thereto.

In the specification and the claims, terms such as "first", "second", "third", "fourth" and the like, if any, will be used to distinguish similar components from each other and be used to describe a specific sequence or a generation sequence, but is not necessarily limited thereto. It may be understood that these terms are compatible with each other under an appropriate environment so that exemplary embodiments of the present invention to be described below may be operated in a sequence different from a sequence shown or described herein. Likewise, in the present specification, in the case in which it is described that a method includes a series of steps, a sequence of these steps suggested herein is not necessarily a sequence in which these steps may be executed. That is, any described step may be omitted and/or any other step that is not described herein may be added to the method.

In the specification and the claims, terms such as "left", "right", "front", "rear", "top, "bottom", "over", "under", and the like, if any, are not necessarily to indicate relative positions that are not changed, but are used for description. It may be understood that these terms are compatible with each other under an appropriate environment so that exemplary embodiments of the present invention to be described below may be operated in a direction different from a direction shown or described herein. A term "connected" used herein is defined as being directly or indirectly connected in an electrical or non-electrical scheme. Targets described as being "adjacent to" each other may physically contact each other, be close to each other, or be in the same general range or region, in the context in which the above phrase is used. Here, a phrase "in an exemplary embodiment" means the same exemplary embodiment, but is not necessarily limited thereto.

Hereinafter, a configuration and an acting effect of exemplary embodiments of the present invention will be described in more detail with reference to the accompanying drawings.

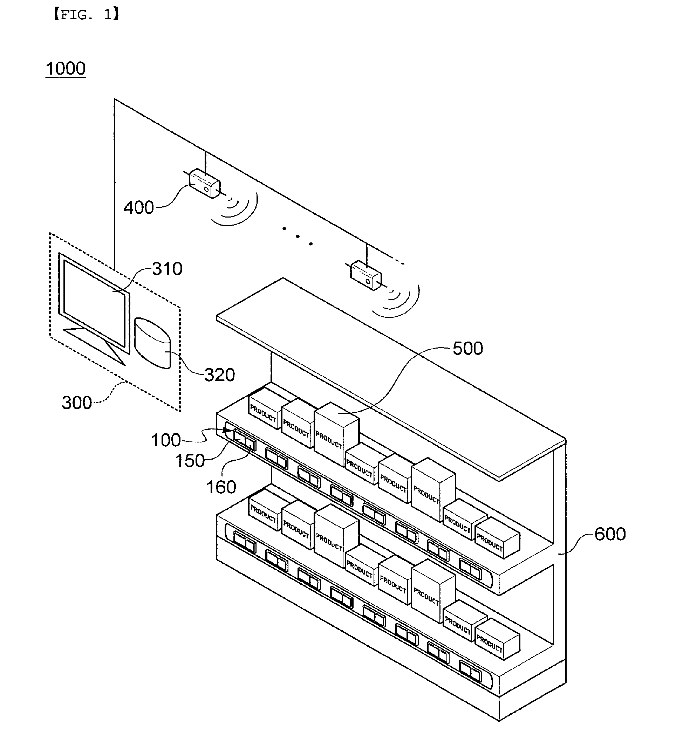

FIG. 1 is a block diagram showing a configuration of an electronic shelf label system 1000 including an electronic shelf label according to an exemplary embodiment of the present invention.

The electronic shelf label system 1000 may be configured to include electronic shelf labels 100, a display stand 600, a server 300, and a relay 400.

Functions of the respective blocks of the electronic shelf label system 1000 configured as described above will be described below.

The electronic shelf label 100 may provide information such as a price, an expiration date, a production date, and the like, of a product through a segment display 150 and a dot-matrix display 160.

Meanwhile, the server 300 may include an information processing unit 310 receiving or processing product information and a database unit 320 storing the product information therein.

The relay 400 may receive the product information from the server 300 and wirelessly transmit the product information to the electronic shelf labels 100 of the display stand 600.

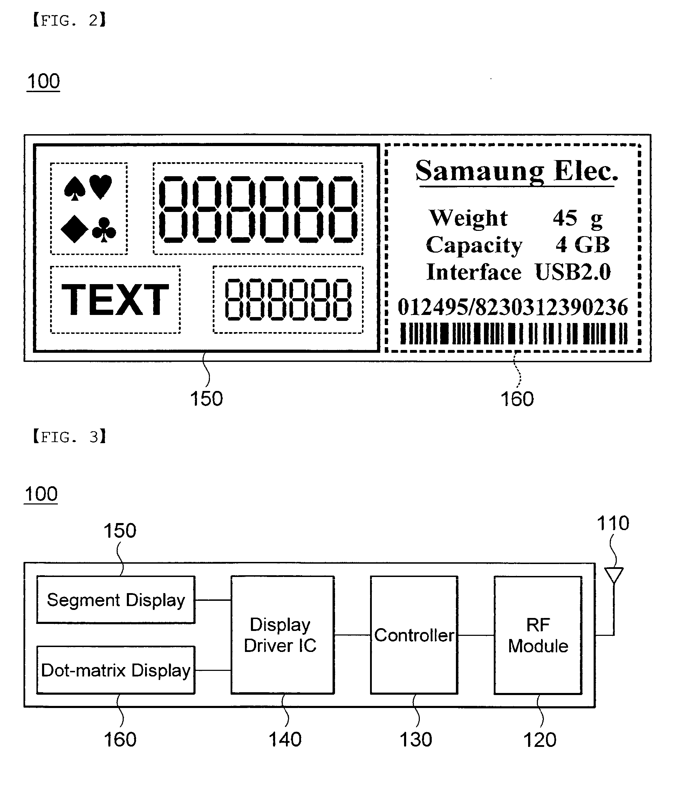

FIG. 2 is a plan view schematically showing the electronic shelf label 100 according to the exemplary embodiment of the present invention.

Referring to FIG. 2, the electronic shelf label 100 according to the exemplary embodiment of the present invention may include both of the segment display 150 and the dot-matrix display 160.

Therefore, a price, an expiration date, a specific character, and the like, may be output using the segment display 150, and other various images may be output using the dot-matrix display 160.

FIG. 3 is a block diagram schematically showing the electronic shelf label 100 according to the exemplary embodiment of the present invention.

Referring to FIG. 3, the electronic shelf label 100 according to the exemplary embodiment of the present invention may include an antenna 110, a radio frequency (RF) module 120, a controller 130, a display driver integrated chip (IC) 140, the segment display 150, and the dot-matrix display 160.

Here, the RF module 120 performs communication with the server or the relay through the antenna 110 to serve to transceive data.

Next, the controller 130 may serve to control the display driver IC 140 according to a signal received from the RF module 120 and be implemented by a general micro control unit (MCU), or the like.

Next, the segment display 150, and the dot-matrix display 160 may be implemented by a general segment type (or passive type) panel or dot-matrix type (or active type) panel according to the related art, respectively.

Finally, the display driver IC 140 may generate and output a control signal for driving the segment display 150 and the dot-matrix display 160 according to a control command of the controller 130.

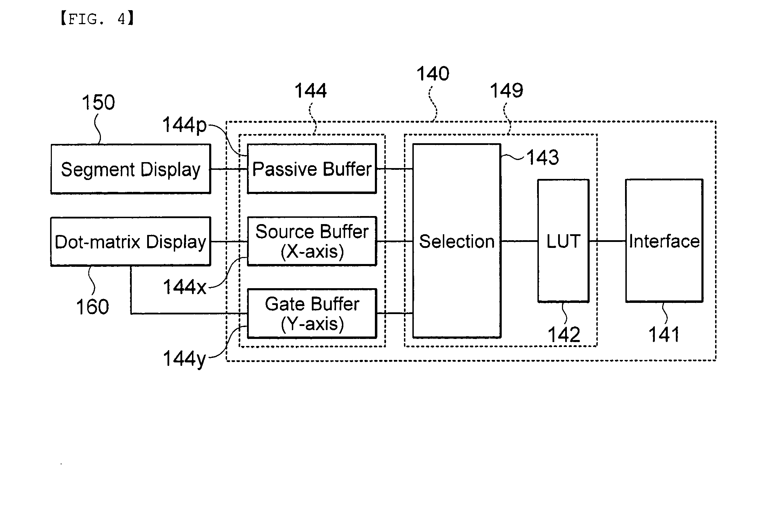

FIG. 4 is a block diagram showing main components of the electronic shelf label 100 according to the exemplary embodiment of the present invention in detail.

Referring to FIG. 4, the display driver IC 140 may include an interface unit 141, a logic processing unit 149, and an output unit 144.

Here, the interface unit 141 serves to receive the control command of the controller 130 to transfer the control command to the logic processing unit 149.

Next, the logic processing unit 149 may include a lookup table 142 and a selecting unit 143 to generate a control signal allowing specific segments of the segment display 150 to be turned on or off and a control signal allowing specific dots of the dot-matrix display 160 to be turned on or off according to the data included in the control command.

Here, the selecting unit 143 distinguishes whether the generated control signals are the control signals for driving the segment display 150 or the control signals for driving the dot-matrix display 160 and transmits the distinguished control signals to the output unit 144.

Next, the output unit 144 is provided between the logic processing unit 149 and the segment display 150 and between the logic processing unit 149 and the dot-matrix display 160 to serve to output the control signals generated in the logic processing unit 149.

Here, an output unit provided between the logic processing unit 149 and the segment display 150 may be defined as a segment control signal output unit, and an output unit provided between the logic processing unit 149 and the dot-matrix display 160 may be defined as a dot-matrix control signal output unit.

Meanwhile, the segment control signal output may include a passive buffer 144p.

In addition, the dot-matrix control signal output unit may include a source buffer 144a outputting an X axis control signal and a gate buffer 144y outputting a Y axis control signal in consideration that the dots of the dot-matrix display 160 are determined by X and Y coordinates.

Therefore, the electronic shelf label 100 may be displayed in the segment scheme and the dot-matrix scheme using only one RF module 120, one controller 130, and one display driver IC 140. As a result, convenience in changing displayed information may be improved without increasing a manufacturing cost, power consumption may be decreased, and a size of the electronic shelf label 100 against a display screen thereof may be optimized.

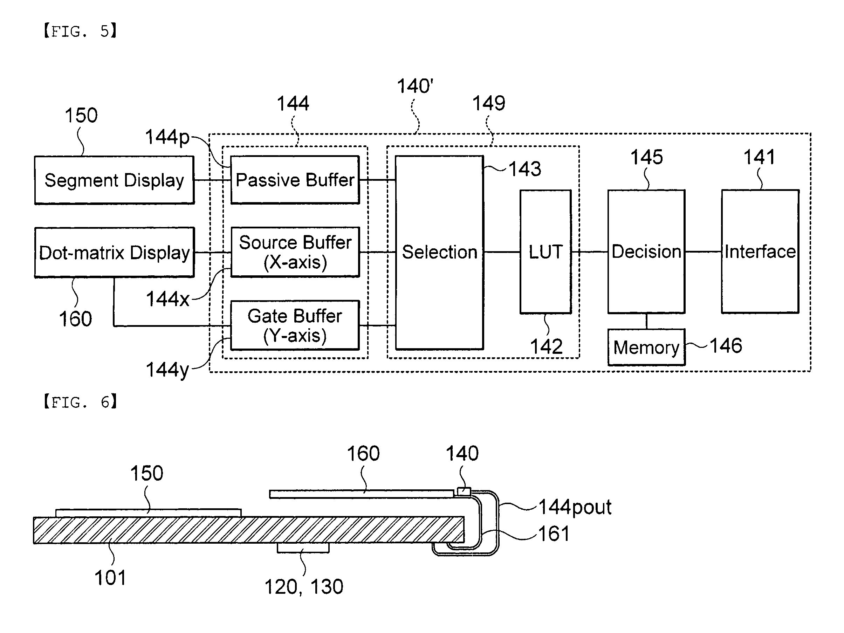

FIG. 5 is a block diagram showing main components of the electronic shelf label 100 according to another exemplary embodiment of the present invention in detail.

Referring to FIG. 5, a display driver IC 140 of the electronic shelf label 100 according to the present embodiment further includes a judging unit 145 and a memory unit 146, unlike the display driver IC 140 of the electronic shelf label 100 according to the embodiment of the present invention shown in FIG. 4.

The memory 146 may store information currently displayed on the segment display 150 or the dot-matrix display 160, an immediately previous control command that has commanded a currently displayed item to be displayed, or data including in the immediately previous control command therein.

When it is assumed that a control command that has commanded the item currently displayed on the segment display 150 or the dot-matrix display 160 to be displayed is a control command before a change, a control command immediately before a control command newly applied to the interface unit 141 may be considered as the control command before a change.

That is, the immediately previous control command is transferred from the controller 130 to the interface unit 141 at the past point in time, such that specific information is current being displayed. Then, when a new control command is transferred from the controller 130 to the interface unit 141, a display content of the segment display 150 or the dot-matrix display 160 is changed through the logic processing unit 149, and the like.

Here, data included in the new control command may be defined as first data, and data included in the immediately previous control command may be defined as second data.

Therefore, the second data may be considered as being stored in the memory unit 146.

The judging unit 145 serves to extract only data different from the second data, in the first data, and transfer the extracted data to the logic processing unit 149.

Therefore, the display driver IC 140 generates and outputs only a control signal according to an item that is to be changed by the new control command among items displayed on the segment display 150 or the dot-matrix display 160, and the segment display 150 or the dot-matrix display 160 receiving the control signal changes turn on/off states of segments or dots thereof as small as possible in order to change display contents.

As a result, power consumed in order to change the display item of the segment display 150 or the dot-matrix display 160 may be minimized.

In addition, in the case of a large store in which the electronic shelf label 100 is installed, temporary discount for specific products is frequently generated. Therefore, it may be considered that a frequency at which a position of a product itself is changed is higher than a frequency at which price information of the product is changed.

In this case, since it is advantageous that information unique to a corresponding product is displayed in a graphic form, it is preferable that this information is displayed on the dot-matrix display 160.

To the contrary, price information, or the like, of the product may be displayed on the segment display 150.

As described above, in the case in which the price information, or the like, of the product is displayed on the segment display 150 and the information unique to the product, which is advantageous to be displayed in the graphic form, is displayed on the dot-matrix display 160, a display change of the electronic shelf label 100 according to the present embodiment may be mainly generated only in the segment display 150. Therefore, power consumed to change the display of the electronic shelf label 100 may be minimized.

FIG. 6 is a partially separated cross-sectional view schematically showing the electronic shelf label 100 according to the exemplary embodiment of the present invention.

In FIG. 6 showing an example in which the above-mentioned components are actually implemented on a substrate 101, an overlapped description of the respective components will be omitted.

Referring to FIG. 6, the segment display 150 is laminated on one surface of the substrate 101, such that the segment display 150 and the substrate 101 may be integrated with each other. Therefore, a manufacturing process may be simplified. Here, the segment display 150 may be implemented by an electronic paper panel, and a circuit pattern formed on a surface of the substrate may serve as one side electrode of the electronic paper panel.

In addition, the segment display 150 may be laminated on one surface of the substrate 101, and the RF module 120 and the controller 130 may be mounted on the other surface of the substrate 101, which is an opposite surface to the surface on which the segment display 150 is laminated.

That is, since only the segment display 150 and the dot-matrix display 160 are positioned on one surface of the substrate 101 and remaining components are positioned on the other surface of the substrate 101, when it is assumed that sizes of screens displaying information are the same as each other, a size of the electronic shelf label 100 may be minimized.

In addition, the dot-matrix display 160 may be manufactured separately from the substrate 101 and be electrically connected to a circuit pattern (not shown) provided on the substrate 101.

Here, one end of a flexible printed circuit board 161 including a circuit wiring may be connected to one end of the dot-matrix display 160, and the other end thereof may be physically coupled to the substrate 101.

In addition, the dot-matrix display 160 and a circuit pattern of the substrate 101 may be electrically connected to each other through the circuit wiring of the flexible printed circuit board 161.

Meanwhile, the above-mentioned display driver IC 140 may be electrically and physically coupled to the flexible printed circuit board 161. Furthermore, the display driver IC 140 and the segment display 150 may be electrically connected to each other through the circuit wiring of the flexible printed circuit board 161 and the circuit pattern of the substrate 101.

In addition, the electronic shelf label 100 according to the exemplary embodiment of the present invention may further include a segment control signal transmitting line 144pout separately from the printed circuit board 161. The segment control signal transmitting line 144pout has one end connected to a circuit pattern electrically connected to the segment display 150 in the circuit pattern of the substrate and the other end connected to the display driver IC 140, thereby making it possible to allow the segment control signal generated in the display driver IC 140 to be transferred to the segment display 150.

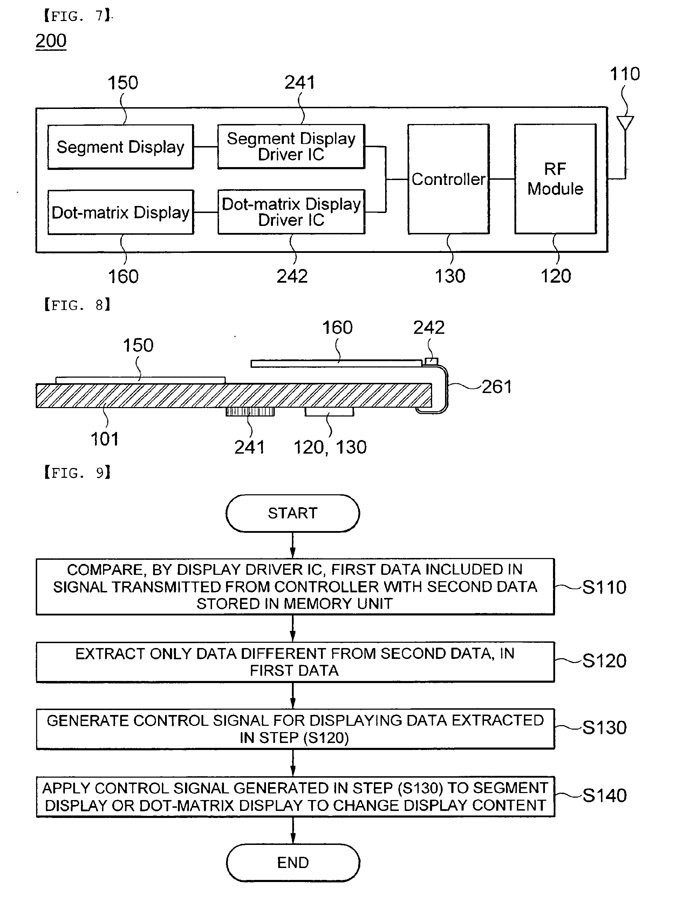

FIG. 7 is a block diagram schematically showing an electronic shelf label 200 according to still another exemplary embodiment of the present invention; and FIG. 8 is a partially separated cross-sectional view schematically showing the electronic shelf label 200 according to still another exemplary embodiment of the present invention.

Referring to FIG. 7, the electronic shelf label 200 according to the present embodiment is different from the electronic shelf label according to the above-mentioned embodiment in that it includes a segment display driver IC 241 disposed between the segment display 150 and the controller 130 and a dot-matrix display driver IC 242 disposed between the dot-matrix display 160 and the controller 130.

That is, in the above-mentioned embodiment, a single display driver IC 140 applies the control signal to both of the segment display 150 and the dot-matrix display 160; however, in the present embodiment, two driver ICs 241 and 242 physically distinguished from each other control the segment display 150 and the dot-matrix display 160, respectively.

Referring to FIG. 8, the dot-matrix display 160 may be connected to the substrate 101 by a flexible printed circuit board 261 of which one region may be provided with the dot-matrix driver IC 242.

In addition, the substrate 101 may have the segment display 150 laminated on one surface thereof to thereby be formed integrally therewith and have the RF module 120, the controller 130, and the segment display driver IC 241 mounted on the other surface thereof.

FIG. 9 is a flow chart schematically showing a method of displaying an electronic shelf label 100 according to the exemplary embodiment of the present invention.

Referring to FIGS. 5 and 9, in the method of displaying an electronic shelf label 100 according to the exemplary embodiment of the present invention, the first data are compared with the second data (S110) in the display driver IC 140, particularly, the judging unit 145, only data different from the second data, in the first data, are extracted (S120), and the control signal for displaying the data extracted in step (S120) is generated in the logic processing unit 149 (S130).

Next, the control signal generated in step (S130) may be applied to the segment display 150 or the dot-matrix display 160 to change the display content (S140).

Therefore, the display item of the electronic shelf label 100 may be changed while consuming power as small as possible.

According to the exemplary embodiments of the present invention configured as described above, price information, sale information, and the like, of a product that are frequently changed are displayed in a segment scheme, and an image, a manufacturer, a summary description, a barcode, and the like, of the product are displayed in a dot-matrix scheme, thereby making it possible to solve the inconvenience that a printed matter should be replaced and significantly decrease a time required to change information.

## Claims

1. An electronic shelf label performing communication with a server or a relay to display information, the electronic shelf label comprising:
a segment display including a plurality of segments and displaying the information according to turn on or off the respective segments;
a dot-matrix display including a plurality of dots and displaying the information according to turn on or off of the dots determined by X and Y coordinates;
a display driver integrated chip (IC) generating a control signal for turning on or off the segments and the dots of the segment display and the dot-matrix display;
a radio frequency (RF) module performing communication with the server or the relay; and
a controller generating a control command controlling the display driver IC according to a signal received through the RF module.

2. The electronic shelf label according to claim 1, wherein the display driver IC includes:
an interface unit connected to the controller to receive the control command;
a logic processing unit connected to the interface unit and processing the control command to generate the control signal; and
an output unit connected to the logic processing unit to output the control signal.

3. The electronic shelf label according to claim 1, wherein the display driver IC includes:
an interface unit connected to the controller to receive a control command including first data;
a memory unit storing second data included in a control command immediately before the control command received by the interface unit;
a judging unit connected to the interface unit and the memory unit and comparing the first data with the second data to extract only data different from the second data, in the first data;
a logic processing unit connected to the judging unit and processing the control command to generate the control signal; and
an output unit connected to the logic processing unit to output the control signal.

4. The electronic shelf label according to claim 2 or 3, wherein the logic processing unit includes:
a lookup table; and
a selecting unit.

5. The electronic shelf label according to claim 4, wherein the output unit includes:
a segment control signal output unit connected between the selecting unit and the segment display and outputting the control signal for turning on or off the segments; and
a dot-matrix control signal output unit connected between the selecting unit and the dot-matrix display and outputting the control signal for turning on or off the dots.

6. The electronic shelf label according to claim 5, wherein the segment control signal output includes a passive buffer, and
the dot-matrix control signal output unit includes a source buffer and a gate buffer.

7. An electronic shelf label performing communication with a server or a relay to display information, the electronic shelf label comprising:
a substrate including a circuit pattern;
a segment display laminated on one surface of the substrate, including a plurality of segments, and displaying the information according to turn on or off the respective segments;
a dot-matrix display including a plurality of dots and displaying the information according to turn on or off of the dots determined by X and Y coordinates;
a display driver IC generating control signals for turning on or off the segments and the dots of the segment display and the dot-matrix display;
an RF module provided on the other surface of the substrate and performing communication with the server or the relay; and
a controller provided on the other surface of the substrate and generating a control command controlling the display driver IC according to a signal received through the RF module.

8. The electronic shelf label according to claim 7, wherein one end of a flexible printed circuit board including a circuit wiring is connected to one end of the dot-matrix display,
the display driver IC is electrically and physically coupled to the flexible printed circuit board, and
the other end of the flexible printed circuit board is physically coupled to the substrate, such that the display driver IC is electrically connected to the dot-matrix display and the circuit pattern by the circuit wiring.

9. The electronic shelf label according to claim 8, wherein the segment display and the display driver IC are electrically connected to each other by the circuit pattern and the flexible printed circuit board.

10. The electronic shelf label according to claim 8, further comprising a segment control signal transmitting line connected between a circuit pattern electrically connected to the segment display in the circuit pattern and the display driver IC and transferring a segment control signal controlling the turn on or off of the segments.

11. An electronic shelf label performing communication with a server or a relay to display information, the electronic shelf label comprising:
a segment display including a plurality of segments and displaying the information according to turn on or off the respective segments;
a segment display driver IC generating a control signal for turning on or off the segments of the segment display unit;
a dot-matrix display including a plurality of dots and displaying the information according to turn on or off of the dots determined by X and Y coordinates;
a dot-matrix driver IC generating a control signal for turning on or off the dots of the dot-matrix display;
an RF module performing communication with the server or the relay;
and
a controller generating a control command controlling the segment display driver IC and the dot-matrix display driver IC according to a signal received through the RF module.

12. An electronic shelf label performing communication with a server or a relay to display information, the electronic shelf label comprising:
a substrate including a circuit pattern;
a segment display laminated on one surface of the substrate, including a plurality of segments, and displaying the information according to turn on or off the respective segments;
a segment display driver IC provided on the other surface of the substrate, connected to the segment display by the circuit pattern, and generating a control signal for turning on or off the segments of the segment display unit;
a dot-matrix display including a plurality of dots and displaying the information according to turn on or off of the dots determined by X and Y coordinates;
a dot-matrix driver IC generating a control signal for turning on or off the dots of the dot-matrix display;
an RF module provided on the other surface of the substrate and performing communication with the server or the relay; and
a controller provided on the other surface of the substrate and generating a control command controlling the segment display driver IC and the dot-matrix display driver IC according to a signal received through the RF module.

13. The electronic shelf label according to claim 12, wherein one end of a flexible printed circuit board including a circuit wiring is connected to one end of the dot-matrix display,
the dot-matrix display driver IC is electrically and physically coupled to the flexible printed circuit board, and
the other end of the flexible printed circuit board is physically coupled to the substrate, such that the dot-matrix display driver IC is electrically connected to the dot-matrix display and the circuit pattern by the circuit wiring.

14. A method of displaying an electronic shelf label for displaying information on the electronic shelf label according to claim 3, the method comprising:
(a) comparing, by the display driver IC, the first data with the second data;
(b) extracting only data different from the second data, in the first data;
(c) generates a control signal for displaying the data extracted in step (b); and
(d) applying the control signal generated in step (c) to the segment display or the dot-matrix display to change a display content.
